# EUROPEAN PATENT APPLICATION

(11) **EP 4 759 583 A1**
(43) Date of publication of application: **17.06.2026**
(21) Application number: 24850570.3
(22) Date of filing: 16.04.2024
(51) Int. Cl.: B60J 10/76, B60J 10/86, E05B 85/10

(54) **OUTER BELT WEATHERSTRIP FOR AUTOMOBILE**

(30) Priority: 07.08.2023 CN 202310993174
(71) Applicant: Ningbo Minth Automotive Parts Research & Development Co., Ltd., Ningbo, Zhejiang 315800 (CN); Jiaxing Minth Machinery Co., Ltd., Jiaxing, Zhejiang 314000 (CN)
(72) Inventor: WANG, Tong, Ningbo, Zhejiang 315800 (CN)
(74) Representative: Elzaburu S.L.P.
(86) International application number: PCT/CN2024/087909
(87) International publication number: WO 2025/030913

(57) **Abstract**

Disclosed is an outer belt weatherstrip for automobiles. The outer belt weatherstrip includes: a first connection structure including a first housing which is connected to a second end and configured to seal the second end; a second connection structure including a second housing which is connected to the fourth end and configured to seal the fourth end, a first insert being inlaid in each of the first housing and the second housing; and a plurality of first engagement members, each having a connection portion and an engagement portion, the connection portion being connected to a sheet metal of an automobile door and the engagement portion being engaged with the first insert. A pulling surface is provided on a side, facing the interior of an automobile, of each of the first housing and the second housing.

## Description

### TECHNICAL FIELD

The present invention relates to the technical field of automobile parts and, in particular, to an outer belt weatherstrip for automobiles.

### BACKGROUND

The outer belt weatherstrip of an automobile door is one of the important components of the automobile door. With the functions of decoration, sealing and guiding for the door glass, the outer belt weatherstrip is usually mounted on the upper end of the automobile door. The automobile door handle, which is a component for opening and closing an automobile door, is usually mounted on the outer side of the automobile door.

However, in the prior art, the automobile door handle is separately arranged on the outer side of the automobile door, and the outer belt weatherstrip is arranged on the upper end of the automobile door. The automobile door handle and the outer belt weatherstrip are two separate parts, resulting in high costs. Moreover, even for a retractable hidden door handle, there is still a gap between a door handle and the outer side of an automobile door and the outer side of the automobile door is not smooth enough, resulting in high driving wind resistance and large driving wind noise.

### SUMMARY

**In** view of the above-mentioned deficiencies in the prior art, the technical solution to be solved by the present invention is to provide an outer belt weatherstrip for automobiles, so as to overcome the problems of high manufacturing cost and increased driving wind resistance and wind noise in the prior art where a door handle and an outer belt weatherstrip are configured as two separate components.

The technical solution adopted by the present invention to solve the technical problem is an outer belt weatherstrip for automobiles. The outer belt weatherstrip includes a first body and a second body. The first body has a first end adjacent to an A-pillar of an automobile and a second end adjacent to a B-pillar of the automobile. The second body has a third end adjacent to the B-pillar of the automobile and a fourth end adjacent to a C-pillar of the automobile. The outer belt weatherstrip further includes:
a first connection structure including a first housing which is connected to the second end and configured to seal the second end; a second connection structure including a second housing which is connected to the fourth end and configured to seal the fourth end, a first insert being inlaid in each of the first housing and the second housing; and
a plurality of first engagement members, each having a connection portion and an engagement portion, the connection portion being connected to a sheet metal of an automobile door and the engagement portion being engaged with the first insert.

A pulling surface is provided on a side, facing the interior of the automobile, of each of the first housing and the second housing. The automobile door has a closed state and a popped-open state; in the closed state, the pulling surface abuts against a B-pillar trim panel or a C-pillar trim panel; in the popped-open state, a gap is formed between the pulling surface and the B-pillar trim panel or the C-pillar trim panel and the gap allows a hand to reach in and push against the pulling surfaces to pull the automobile door open.

Further, the pulling surfaces are gradually inclined toward the exterior of the automobile from top to bottom.

Further, a flocking layer is provided on each of the pulling surfaces.

Further, each of the first housing and the second housing has a mounting cavity in which the first insert is inlaid;
a plurality of first limiting posts and a plurality of first limiting holes are provided on an inner wall of the mounting cavity, and a plurality of second limiting posts and a plurality of second limiting holes are provided on an outer wall of the first insert; the first limiting posts are fitted into the second limiting holes, and the second limiting posts are fitted into the first limiting holes.

Further, two ends of each first insert abut against the two ends of the corresponding mounting cavity respectively, and the bottom of each first insert abuts against the bottom side of the corresponding mounting cavity.

Further, each first insert is configured in a U-shape.

Further, each first insert includes a first side plate and a second side plate, an engagement groove is provided between the first side plate and the second side plate, and the first engagement member is fitted into the engagement groove and engaged with the first insert.

Further, the first side plate is provided with a plurality of engagement tabs, each of which has a snap-in surface and a locking surface; the snap-in surface is gradually inclined toward the second side plate in a direction in which the first engagement member is fitted into the engagement groove;
the engagement portion is provided with a plurality of locking holes; each engagement tab is fitted at least partially into the corresponding locking hole, with the locking surface abutting against a side wall of the locking hole.

Further, each first insert further includes a bottom plate, and the first side plate and the second side plate are fixedly connected to two sides of the bottom plate respectively;
when the locking surfaces abut against the side walls of the locking holes, an end of the first engagement member abuts against the bottom plate.

Further, the outer belt weatherstrip further includes a third connection structure; the third connection structure includes a third end plate and a plurality of third side plates fixedly connected to the third end plate; the third end plate is connected to the first end, and the third side plates are fitted with the sides of the first body.

Further, a side of the third end plate away from the first body is further provided with an extension rib, which is configured to be fitted with the sheet metal of the automobile door.

Further, the outer belt weatherstrip further includes a fourth connection structure which is connected to the third end; a second engagement member extends downward from the fourth connection structure, and is configured to be engaged with a side frame of the automobile door.

Further, the second engagement member includes two extension plates opposite to each other, and an engagement plate is connected to an inner side of each extension plate, and the door edge of the automobile door is clamped between the two engagement plates. The door edge refers to the side edge of the sheet metal of the automobile door.

Further, an insert space is provided between each engagement plate and the corresponding extension plate.

The outer belt weatherstrip further includes a U-shaped second insert, which includes two preloading plates arranged opposite to each other; each of the two preloading plates is fitted into one insert space respectively to provide a preload force that drives the two engagement plates to approach each other.

Further, a plurality of first limiting recesses are provided on each engagement plate, and a plurality of first limiting protrusions are provided on each extension plate;
a plurality of second limiting recesses and a plurality of second limiting protrusions are provided on each preloading plate; the second limiting protrusions are fitted into the first limiting recesses, and the first limiting protrusions are fitted into the second limiting recesses.

Further, a flocking layer for connection with the B-pillar trim panel of the automobile is provided on a side of the fourth connection structure facing the interior of the automobile.

Compared with the prior art, the present invention has the following beneficial effects:

When the automobile door is unlocked via a button or a proximity card on the door, the door pops open by a certain gap; a driver or passenger can put a hand into the gap and drive the pulling surfaces to pull and open the automobile door outward, thus achieving door opening. That is, the present application eliminates the need for a handle provided on the outer side of the automobile door, thereby providing a novel hidden door handle. Compared with the prior art in which a retractable hidden door handle arranged on the outer side of an automobile door, the present application integrates a door handle with an outer belt weatherstrip, which saves the cost of arranging a separate door handle. Moreover, there is no gap between the door handle and the outer side of the automobile door, and the outer side of the automobile door becomes smoother, thereby reducing driving wind resistance.

### BRIEF DESCRIPTION OF DRAWINGS

FIG. 1 is a schematic structural diagram illustrating a first body, a first connection structure and a third connection structure according to an embodiment.
FIG. 2 is a schematic structural diagram illustrating a second body, a second connection structure and a fourth connection structure according to an embodiment.
FIG. 3 is a schematic structural diagram illustrating a first engagement member according to an embodiment.
FIG. 4 is a schematic structural diagram illustrating a first connection structure according to an embodiment.
FIG. 5 is a schematic structural diagram illustrating a first insert according to an embodiment.
FIG. 6 is a schematic structural diagram of a first housing according to an embodiment, viewed from one perspective.
FIG. 7 is a schematic structural diagram of the first housing according to the embodiment, viewed from another perspective.
FIG. 8 is a schematic structural diagram illustrating a fourth connection structure according to an embodiment.
FIG. 9 is a cross-sectional diagram taken along line A-A in FIG. 8;
FIG. 10 is a schematic structural diagram illustrating a second insert according to an embodiment.
FIG. 11 is a schematic structural diagram illustrating a third connection structure according to an embodiment.

### Reference numerals:

100. first body;
200. second body;
300. first connection structure; 310. first housing; 311. pulling surface; 312. first limiting post; 313. first limiting hole; 320. first insert; 321. engagement tab; 322. snap-in surface; 323. locking surface; 324. second limiting hole; 325. second limiting post;
400. second connection structure; 410. second housing;
500. third connection structure; 510. third end plate; 520. third side plate; 530. extension rib;
600. fourth connection structure; 610. second engagement member; 611. extension plate; 612. engagement plate; 620. second insert; 621. preloading plate;
700. first engagement member; 710. locking hole.

### DETAILED DESCRIPTION OF EMBODIMENTS

The following are specific embodiments of the present invention to further describe the technical solution of the present invention in conjunction with the accompanying drawings, but the present invention is not limited to these embodiments.

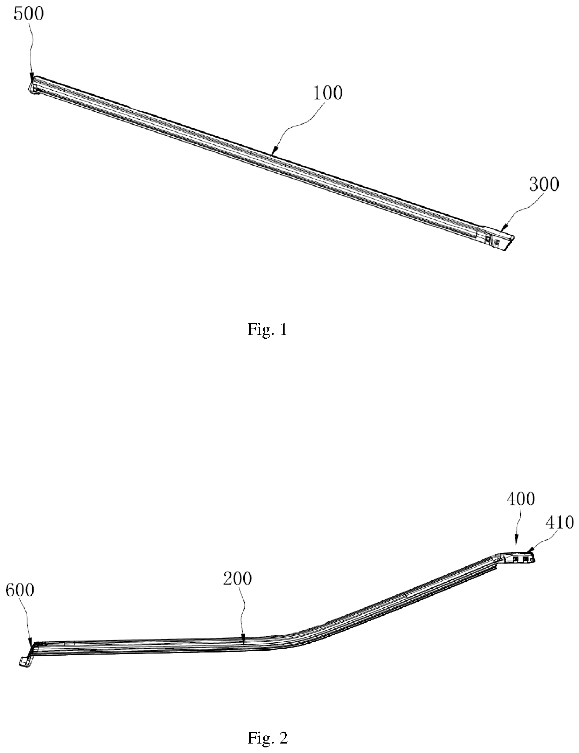

Referring to FIGS. 1-7, the present invention discloses an outer belt weatherstrip for automobiles. The outer belt weatherstrip includes a first body 100 and a second body 200. The first body 100 has a first end adjacent to an A-pillar of an automobile and a second end adjacent to a B-pillar of the automobile. The second body 200 has a third end adjacent to the B-pillar of the automobile and a fourth end adjacent to a C-pillar of the automobile. The outer belt weatherstrip further includes:
a first connection structure 300 including a first housing 310 which is connected to the second end and configured to seal the second end; a second connection structure 400 including a second housing 410 which is connected to the fourth end and configured to seal the fourth end, a first insert 320 being inlaid in each of the first housing 310 and the second housing 410; and
a plurality of first engagement members 700, each having a connection portion and an engagement portion, the connection portion being connected to a sheet metal of the automobile door and the engagement portion being engaged with the first insert 320.

A pulling surface is provided on a side, facing the interior of the automobile, of each of the first housing and the second housing. The automobile door has a closed state and a popped-open state; in the closed state, the pulling surface abuts against a B-pillar trim panel or a C-pillar trim panel; in the popped-open state, a gap is formed between the pulling surface and the B-pillar trim panel or the C-pillar trim panel and the gap allows a hand to reach in and push against the pulling surfaces to pull the automobile door open.

The outer belt weatherstrip of the present application is applied to semi-automatic doors of automobiles. Specifically, when the automobile door is unlocked via a button or a proximity card on the door, the door pops open by a certain gap; a driver or passenger can put a hand into the gap and drive the pulling surfaces 311 to pull and open the automobile door outward, thus achieving door opening That is, the present application eliminates the need for a handle provided on the outer side of the automobile door, thereby providing a novel hidden door handle. Compared with the conventional retractable hidden door handle arranged on the outer side of the automobile door, the present application integrates a door handle with an outer belt weatherstrip, which saves the cost of arranging a separate door handle. Moreover, there is no gap between the door handle and the outer side of the automobile door, and the outer side of the automobile door becomes smoother, thereby reducing driving wind resistance.

It should be noted that both the first connection structure 300 and the second connection structure 400 are manufactured by insert injection molding; the first inserts 320 are pre-placed inside the first housing 310 and the second housing 410 during the injection molding process, eliminating the need for subsequent assembly.

More specifically, in the present application, a first connection structure 300 is provided, such that the first housing 310 is connected to the first end and seals an opening at the first end; and a second connection structure 400 is provided, such that the second housing 410 is connected to the fourth end and seals an opening at the fourth end.
Moreover, a first insert 320 is inlaid in each of the first housing 310 and the second housing 410, and first engagement members 700 are arranged on the sheet metal of the automobile door, so that the first engagement members 700 are engaged with the first inserts 320, thereby realizing the connection between the outer belt weatherstrip and the automobile door.

That is to say, the first connection structure 300 and the second connection structure 400 function to both seal the outer belt weatherstrip and connect the automobile door. Compared with the design in which a sealing member and a connecting member are arranged separately, the present application integrates a sealing member and a connecting member in the outer belt weatherstrip into one component, which reduces the cost. Moreover, there is no need to mount the connecting member and the sealing member separately, thus simplifying the assembly steps.

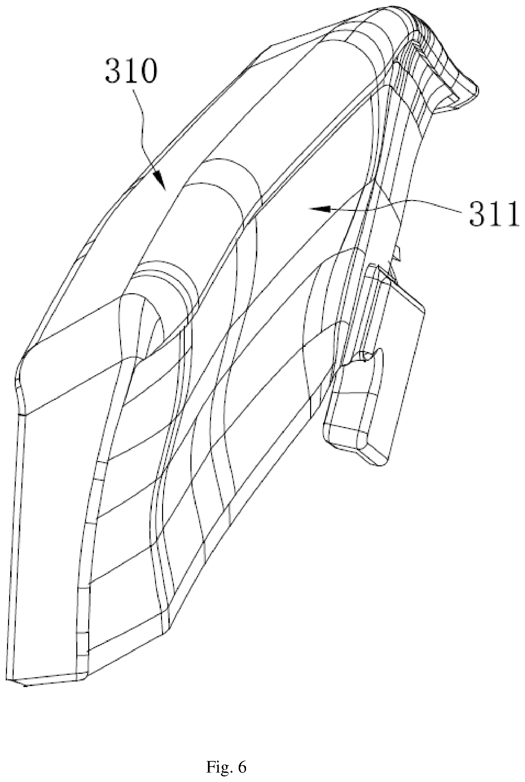

Further, referring to FIG. 6, the pulling surfaces 311 are gradually inclined toward the exterior of the automobile from top to bottom, and a flocking layer is provided on each of the pulling surfaces 311.

The pulling surfaces 311 are gradually inclined toward the exterior of the automobile from top to bottom, such that the upper end of the pulling surface 311 is closer to the inner side and the lower end is closer to the outer side. In turn, the curvature of the pulling surface 311 is more consistent with the bending curvature of fingers when a palm reaches into the gap to pull the door, increasing the contact area and improving comfort during door opening. Moreover, a flocking layer is arranged on each of the pulling surfaces 311, so that the palm and fingers come into contact with the flocking layers when opening the door, further improving the comfort during door opening.

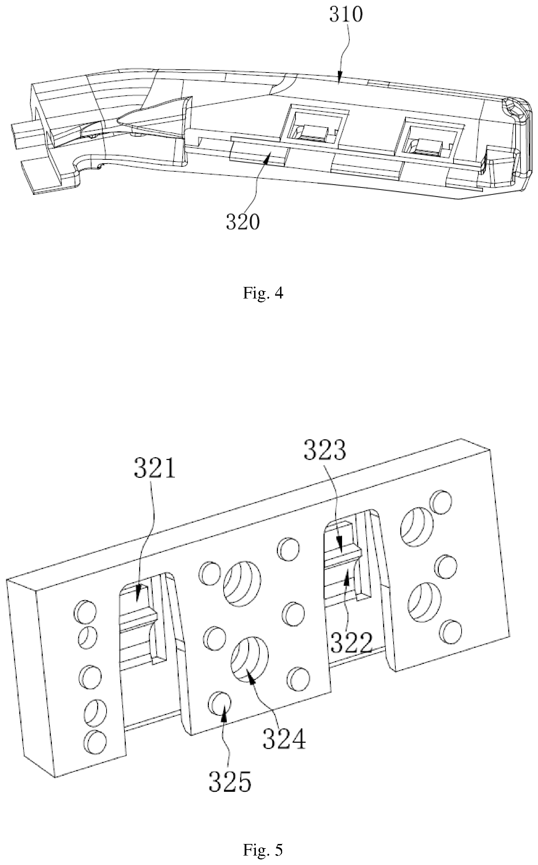

Further, with reference to FIG. 5, each of the first housing 310 and the second housing 410 has a mounting cavity in which the first insert 320 is inlaid.

A plurality of first limiting posts 312 and a plurality of first limiting holes 313 are provided on an inner wall of the mounting cavity, and a plurality of second limiting posts 325 and a plurality of second limiting holes 324 are provided on an outer wall of the first insert 320; the first limiting posts 312 are fitted into the second limiting holes 324, and the second limiting posts 325 are fitted into the first limiting holes 313.

Since the first limiting posts 312 are configured to be fitted into the second limiting holes 324, and the second limiting posts 325 are configured to be fitted into the first limiting holes 313, a locking force against relative movement is generated between the first insert 320 and the first housing 310, thereby preventing the first insert 320 and the first housing 310 from getting loose.

Further, referring to FIG. 4, two ends of each first insert 320 abut against the two ends of the corresponding mounting cavity respectively, and the bottom of each first insert 320 abuts against the bottom side of the corresponding mounting cavity.

The two ends of each first insert 320 abutting against the two ends of the corresponding mounting cavity achieves the lateral limiting against the first insert 320, and the bottom of each first insert 320 abutting against the bottom side of the corresponding mounting cavity achieves the longitudinal limiting against the first insert 320. Limiting the first inserts 320 in multiple directions prevents the first inserts 320 from getting loose.

Further, referring to FIG. 5, each first insert 320 is configured in a U-shape.

Each first insert 320 includes a first side plate and a second side plate, an engagement groove is provided between the first side plate and the second side plate, and the first engagement member 700 can be fitted into the engagement groove and engaged with the first insert 320.

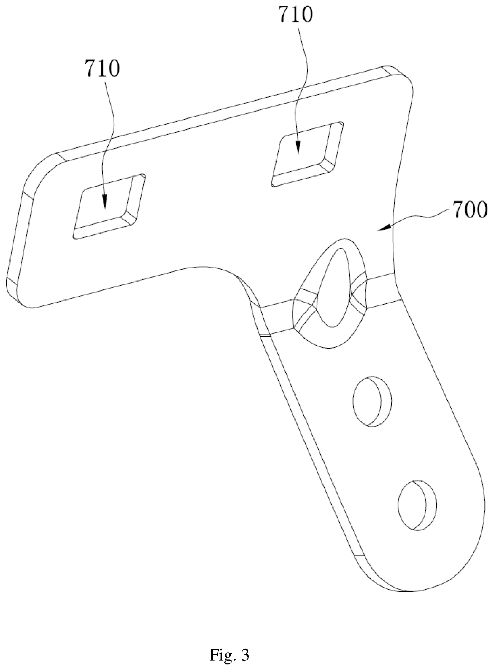

Further, referring to FIGS. 3 and 5, the first side plate is provided with a plurality of engagement tabs 321, each of which has a snap-in surface 322 and a locking surface 323. The snap-in surface 322 is gradually inclined toward the second side plate in a direction in which the first engagement member 700 is fitted into the engagement groove.

The engagement portion is provided with a plurality of locking holes 710. Each engagement tab 321 can extend at least partially into the corresponding locking hole 710, with the locking surface 323 abutting against the side wall of the locking hole 710.

Specifically, before the outer belt weatherstrip is mounted, the first engagement member 700 is first fixed to the sheet metal of the automobile door. Then, the outer belt weatherstrip is moved until the engagement portion is aligned with the engagement groove. Next, the outer belt weatherstrip is pressed downward until the engagement portion is engaged into the engagement groove, thus completing the mounting of the outer belt weatherstrip. In this way, the mounting procedure of the outer belt weatherstrip is simplified.

During the process of the engagement portion being engaged into the engagement groove, the engagement portion first comes into contact with the end of each snap-in surface 322 away from the corresponding locking surface 323. Then, as the snap-in surfaces 322 slide relative to the engagement portion, the engagement tabs 321 are pressed to deform, and after the engagement portion passes over the snap-in surfaces 322 and reaches the locking surfaces 323, the engagement tabs 321 recover from the deformation, and partially or fully extend into the locking holes 710, with the locking surfaces 323 abutting against the inner walls of the locking holes 710. In this way, the engagement portion is effectively prevented from withdrawing from the engagement groove in an opposite direction.

Further, each first insert 320 further includes a bottom plate, and the first side plate and the second side plate are fixedly connected to two sides of the bottom plate respectively.

When the locking surfaces 323 abut against the side walls of the locking holes 710, the end of the first engagement member 700 abuts against the bottom plate.

Specifically, the bottom plate abuts against the end of the first engagement member 700, and each locking surface 323 abuts against the side wall of the corresponding locking hole 710, so as to simultaneously apply two opposite acting forces to the first engagement member 700. As a result, the first engagement member 700 will not wobble in the engagement groove, thereby avoiding the wobbling of the outer belt weatherstrip.

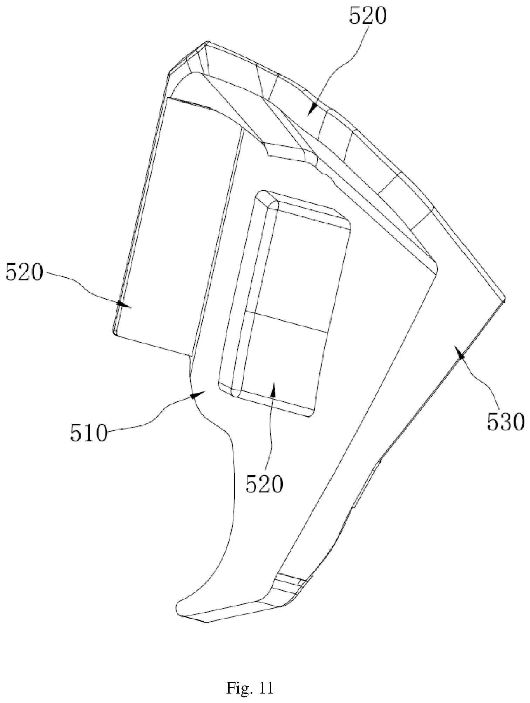

Further, referring to FIG. 11, the outer belt weatherstrip further includes a third connection structure 500. The third connection structure 500 includes a third end plate 510 and a plurality of third side plates 520 fixedly connected to the third end plate 510. The third end plate 510 is connected to the first end, and the third side plates 520 are fitted with the sides of the first body 100.

A side of the third end plate 510 away from the first body 100 is further provided with an extension rib 530, which is configured to be fitted with the sheet metal of the automobile door.

Specifically, the third end plate 510 can seal the opening at the first end, and the third side plates 520 are fitted with the sides of the first body 100. In this way, the contact area between the third connection structure 500 and the first body 100 can be increased, thereby enhancing the connection strength between the third connection structure 500 and the first body 100. Moreover, the extension rib 530 being fitted with the sheet metal can enhance the connection strength between the outer belt weatherstrip and the automobile door, preventing the outer belt weatherstrip from getting loose.

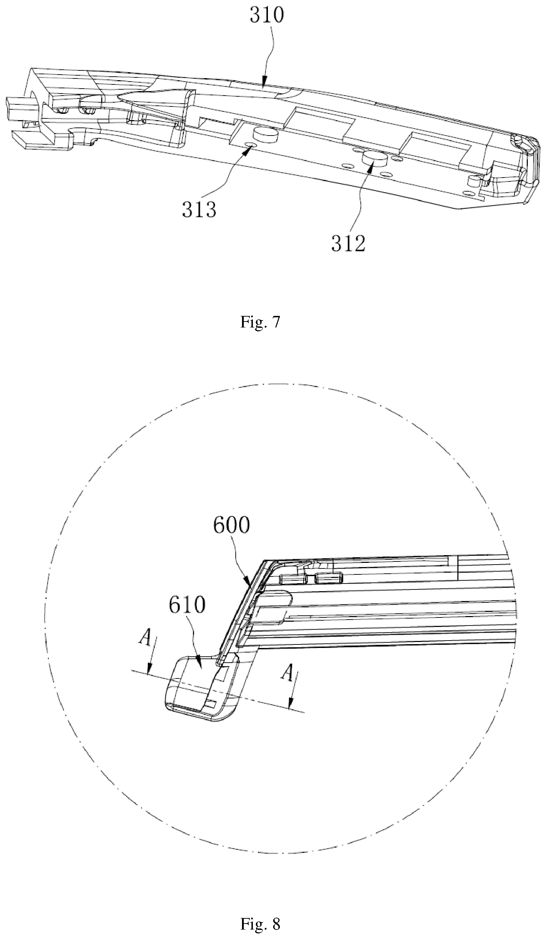

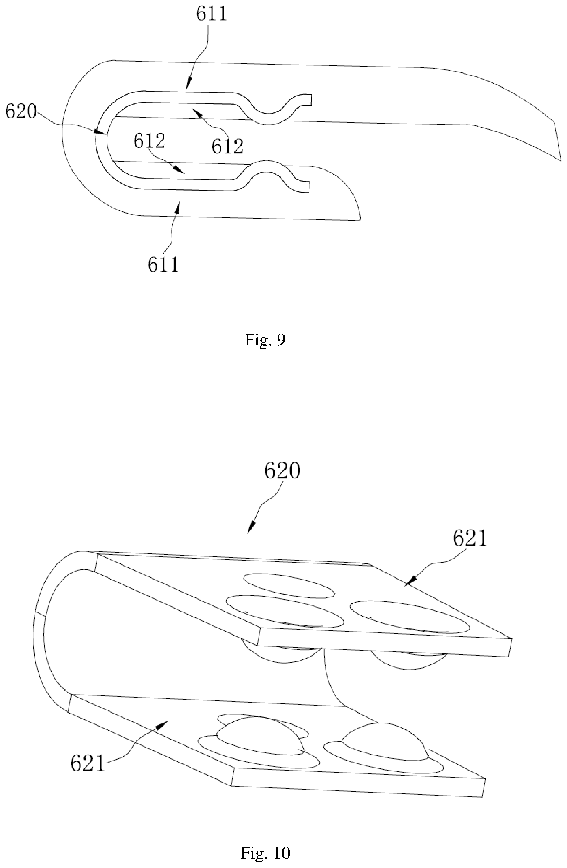

Further, referring to FIGS. 8-10, the outer belt weatherstrip further includes a fourth connection structure 600 which is connected to the third end. A second engagement member 610 extends downward from the fourth connection structure 600, and is configured to be engaged with a side frame of the automobile door.

The second engagement member 610 includes two extension plates 611 opposite to each other, and an engagement plate 612 is connected to the inner side of each extension plate 611, and the door edge of the automobile door can be clamped between the two engagement plates 612.

The fourth connection structure 600 is provided to seal an opening at the third end. The second engagement member 610 extending downward from the fourth connection structure 600 is engaged with the side frame of the automobile door, thereby enhancing the connection strength between the outer belt weatherstrip and the automobile door. Moreover, the second engagement member 610 can seal an opening at the side frame of the automobile door.

Further, an insert space is provided between each engagement plate 612 and the corresponding extension plate 611.

The outer belt weatherstrip further includes a U-shaped second insert 620, which includes two preloading plates 621 arranged opposite to each other. Each of the two preloading plates 621 is fitted into one insert space to provide a preload force that drives the two engagement plates 612 to approach each other. The second insert 620 and the second engagement member 610 are manufactured by insert injection molding.

A plurality of first limiting recesses are provided on each engagement plate 612, and a plurality of first limiting protrusions are provided on each extension plate 611. A plurality of second limiting recesses and a plurality of second limiting protrusions are provided on each preloading plate 621. The second limiting protrusions 1102 are fitted into the first limiting recesses, and the first limiting protrusions are fitted into the second limiting recesses.

Since the first limiting protrusions are configured to be fitted into the second limiting recesses and the second limiting protrusions are configured to be fitted into the first limiting recesses, a locking force against relative movement is generated between the second insert 620 and the second engagement member 610, thereby preventing the second insert 620 from getting loose.

Further, a flocking layer for connection with the B-pillar trim panel of the automobile is provided on a side of the fourth connection structure facing the interior of the automobile. By arranging the flocking layer on the side of the fourth connection structure, direct contact between the fourth connection structure and the B-pillar trim panel of the automobile is avoided, thereby preventing abnormal noise caused by friction between the fourth connection structure and the B-pillar trim panel of the automobile when the automobile runs. In addition, the flocking layer also plays a role of protecting the fourth connection structure and the B-pillar trim panel of the automobile, thereby increasing the service life of the fourth connection structure and the B-pillar trim panel of the automobile.

**It** should be noted that all directional indications in the embodiments of the invention (such as upper, lower, left, right, front, and back) are only used to explain the relative position relationship, movement, etc. between the components under a certain posture (as shown in the accompanying drawings). If the specific posture changes, the directional indications will also change accordingly.

**In** addition, in the invention, the descriptions such as "first", "second", and "one", are only used for descriptive purposes, and should not be construed as indicating or implying their relative importance or implicitly indicating the number of technical features indicated. Therefore, the features defined as "first" and "second" may explicitly or implicitly include at least one of the features. In the description of the invention, the meaning of "multiple" is at least two, such as two and three, unless otherwise clearly and specifically defined.

As used herein, unless otherwise clearly specified and defined, the terms "connect", "fix", etc. should be understood in a broad sense. For example, "fix" may be a fixed connection, a detachable connection, or an integral connection; it may be a mechanical connection or an electrical connection; it may be a direct connection or an indirect connection by means of an intermediate medium. it may be the internal connection of two elements or the interaction relationship between two elements, unless otherwise clearly defined. For those of ordinary skill in the art, the specific meanings of the above terms in the invention can be understood according to specific circumstances.

In addition, the technical solutions of the various embodiments of the invention can be combined, but it must be based on the fact that those of ordinary skill in the art can implement it. When the combination of technical solutions is contradictory or cannot be achieved, it should be considered that such a combination of technical solutions does not exist and is not within the scope of the invention.

## Claims

1. An outer belt weatherstrip for automobiles, the outer belt weatherstrip comprising a first body and a second body, wherein the first body has a first end adjacent to an A-pillar of an automobile and a second end adjacent to a B-pillar of the automobile, and the second body has a third end adjacent to the B-pillar of the automobile and a fourth end adjacent to a C-pillar of the automobile; wherein the outer belt weatherstrip further comprises:
a first connection structure comprising a first housing which is connected to the second end and configured to seal the second end; a second connection structure comprising a second housing which is connected to the fourth end and configured to seal the fourth end, a first insert being inlaid in each of the first housing and the second housing; and
a plurality of first engagement members, each having a connection portion and an engagement portion, the connection portion being connected to a sheet metal of an automobile door and the engagement portion being engaged with the first insert;
wherein a pulling surface is provided on a side, facing the interior of the automobile, of each of the first housing and the second housing. The automobile door has a closed state and a popped-open state; in the closed state, the pulling surface abuts against a B-pillar trim panel or a C-pillar trim panel; in the popped-open state, a gap is formed between the pulling surface and the B-pillar trim panel or the C-pillar trim panel and the gap allows a hand to reach in and push against the pulling surfaces to pull the automobile door open.

2. The outer belt weatherstrip for automobiles according to claim 1, wherein the pulling surfaces are gradually inclined toward the exterior of the automobile from top to bottom.

3. The outer belt weatherstrip for automobiles according to claim 2, wherein a flocking layer is provided on each of the pulling surfaces.

4. The outer belt weatherstrip for automobiles according to claim 1, wherein each of the first housing and the second housing has a mounting cavity in which the first insert is inlaid;
a plurality of first limiting posts and a plurality of first limiting holes are provided on an inner wall of the mounting cavity, and a plurality of second limiting posts and a plurality of second limiting holes are provided on an outer wall of the first insert; the first limiting posts are fitted into the second limiting holes, and the second limiting posts are fitted into the first limiting holes.

5. The outer belt weatherstrip for automobiles according to claim 4, wherein two ends of each first insert abut against the two ends of the corresponding mounting cavity respectively, and the bottom of each first insert abuts against the bottom side of the corresponding mounting cavity.

6. The outer belt weatherstrip for automobiles according to claim 1, wherein each first insert is configured in a U-shape.

7. The outer belt weatherstrip for automobiles according to claim 6, wherein each first insert comprises a first side plate and a second side plate, an engagement groove is provided between the first side plate and the second side plate, and the first engagement member is fitted into the engagement groove and engaged with the first insert.

8. The outer belt weatherstrip for automobiles according to claim 7, wherein the first side plate is provided with a plurality of engagement tabs, each of which has a snap-in surface and a locking surface; the snap-in surface is gradually inclined toward the second side plate in a direction in which the first engagement member is fitted into the engagement groove;
the engagement portion is provided with a plurality of locking holes; each engagement tab is fitted at least partially into the corresponding locking hole, with the locking surface abutting against a side wall of the locking hole.

9. The outer belt weatherstrip for automobiles according to claim 8, wherein each first insert further comprises a bottom plate, and the first side plate and the second side plate are fixedly connected to two sides of the bottom plate respectively;
when the locking surfaces abut against the side walls of the locking holes, an end of the first engagement member abuts against the bottom plate.

10. The outer belt weatherstrip for automobiles according to claim 1, wherein the outer belt weatherstrip further comprises a third connection structure; the third connection structure comprises a third end plate and a plurality of third side plates fixedly connected to the third end plate; the third end plate is connected to the first end, and the third side plates are fitted with the sides of the first body.

11. The outer belt weatherstrip for automobiles according to claim 10, wherein a side of the third end plate away from the first body is further provided with an extension rib, which is configured to be fitted with the sheet metal of the automobile door.

12. The outer belt weatherstrip for automobiles according to claim 1, wherein the outer belt weatherstrip further comprises a fourth connection structure which is connected to the third end; a second engagement member extends downward from the fourth connection structure, and is configured to be engaged with a side frame of the automobile door.

13. The outer belt weatherstrip for automobiles according to claim 12, wherein the second engagement member comprises two extension plates opposite to each other, and an engagement plate is connected to an inner side of each extension plate, and the door edge of the automobile door is clamped between the two engagement plates.

14. The outer belt weatherstrip for automobiles according to claim 13, wherein an insert space is provided between each engagement plate and the corresponding extension plate;
the outer belt weatherstrip further comprising a U-shaped second insert, which comprises two preloading plates arranged opposite to each other, wherein each of the two preloading plates is fitted into oneinsert space respectively to provide a preload force that drives the two engagement plates to approach each other.

15. The outer belt weatherstrip for automobiles according to claim 14, wherein a plurality of first limiting recesses are provided on each engagement plate, and a plurality of first limiting protrusions are provided on each extension plate;
a plurality of second limiting recesses and a plurality of second limiting protrusions are provided on each preloading plate; the second limiting protrusions are fitted into the first limiting recesses, and the first limiting protrusions are fitted into the second limiting recesses.
